# EUROPÄISCHE PATENTSCHRIFT

(11) **EP 0 333 884 B1**
(45) Veröffentlichungstag und Bekanntmachung des Hinweises auf die Patenterteilung: **08.06.1994**
(21) Anmeldenummer: 88104413.5
(22) Anmeldetag: 19.03.1988
(51) Int. Cl.: G06F 7/52, G06F 7/50

(54) **CMOS-Parallel-Serien-Multiplizierschaltung sowie deren Multiplizier- und Addierstufen**
Parallel-series multiplier circuit and its multiplier and adder stages
Circuit multiplieur parallèle-série ainsi que ses étages de multiplication et d'addition

(43) Veröffentlichungstag der Anmeldung: 27.09.1989
(73) Patentinhaber: Deutsche ITT Industries GmbH, 79108 Freiburg (DE)
(72) Erfinder: Uhlenhoff, Arnold, Dipl.-Ing., D-7830 Emmendingen (DE)

(56) Entgegenhaltungen:
- EP-A- 0 096 333
- US-A- 3 610 907
- US-A- 3 878 985
- US-A- 4 498 135
- NACHRICHTEN ELEKTRONIK, Band 36, Nr. 2, Februar 1982, Seiten 75-78, Heidelberg, DE; V: Leesemann: "Seriell/Parallel-Multiplizierer für die digitale Signalverarbeitung, Teil 1"

## Beschreibung

Die Erfindung beschäftigt sich mit der Schaffung von CMOS-Multiplizier-Haupt-, -Zwischen- und -Anfangsstufen für CMOS-Parallel-Serien-Multiplizierschaltungen, die Zweierkomplement-Dualzahlen miteinander multiplizieren. Die Erfindung wendet das in der EP-A 200 797 (ITT-case A.Uhlenhoff 6) beschriebene Prinzip auf CMOS-Parallel-Serien-Multiplizierschaltungen an, wonach das Taktsignal für die serielle Datenverarbeitung aus einem mitintegrierten Taktoszillator stammt, der als Ringoszillator aus einer ungeraden Anzahl invertierender Stufen besteht.

In US-A 36 10 907 ist ein Multiplizierer für Dualzahlen beschrieben, bei dem die Multiplikation in gemischter Form parallel/seriell erfolgt. Alle Stellen eines Multiplikanten werden ersten Dateneingängen einer einzigen Multipliziererkette parallel zugeführt. Alle Stellen eines Multiplikators werden der Multipliziererkette jedoch seriell zugeführt, wobei in jedem Rechenschritt jeweils eine einzige Multiplikatorstelle allen zweiten Dateneingängen der Multipliziererkette gemeinsam zugeführt wird. Die Multipliziererkette besteht aus hintereinandergekoppelten Multiplizierstufen, deren jeweiliger erster und zweiter Dateneingang einem UND-Gatter zugeführt ist, das die logische Verknüpfung für die Multiplikation ausführt. Die Multipliziererkette enthält ferner über Verzögerer geführte Addierstufen, die die Summenbildung bei dem seriellen Multiplikationsverfahren durchführen.

Die Aufgabe der in den Ansprüchen 1 bis 3 gekennzeichneten Erfindung besteht zunächst darin, möglichst wenig Transistoren enthaltende Multiplizierstufen anzugeben und ferner in den Ansprüche 4 und 5, die Multiplizierschaltung ihrerseits aus wiederum möglichst wenig solcher Stufen aufzubauen. Dies gelingt unter anderem dadurch, daß die in der EP-A 225 960 (ITT-case M.F.Ullrich/A.Uhlenhoff 11/7) beschriebene synchronisierte Ringoszillatoranordnung mit spezieller CMOS-Inverterkette benutzt werden kann, um die verschiedenen Takt- und Steuersignale der Multiplizierschaltung zu erzeugen.

Die Vorteilhaftigkeit der Erfindung zeigt sich u.a. daran, daß mit einer selbstverständlich als monolithisch integrierte Schaltung realisierten CMOS-Parallel-Serien-Multiplizierschaltung die Produkte solcher achtstelliger Multiplikatoren und bis zu 16-stelliger Multiplikanden ohnes weiteres berechnet werden konnten, die als auf eine Datenrate von etwa 20 MHz bezogene Daten zugeführt wurden. Die Ringoszillatorfrequenz betrug dabei etwa 200 MHz.

Die Erfindung wird nun anhand der Figuren der Zeichnung näher erläutert.
Fig. 1 zeigt das Schaltbild der CMOS-Multiplizier-Hauptstufe,
Fig. 2 zeigt das Schaltbild der CMOS-Multiplizier-Zwischenstufe,
Fig. 3 zeigt das Schaltbild der CMOS-Multiplizier-Anfangsstufe,
Fig. 4 zeigt das Schaltbild der CMOS-Addierstufe,
Fig. 5 zeigt stark schematisiert das Schaltbild der CMOS-Parallel-Serien-Multiplizierschaltung,
Fig. 6 zeigt für ein spezielles Ausführungsbeispiel die zum Betrieb der Anordnung nach Fig. 5 erforderlichen Takt- und Steuersignale, und die
Fig. 7 bis 12 zeigen dem Verständnis der Erfindung dienende Tabellen.

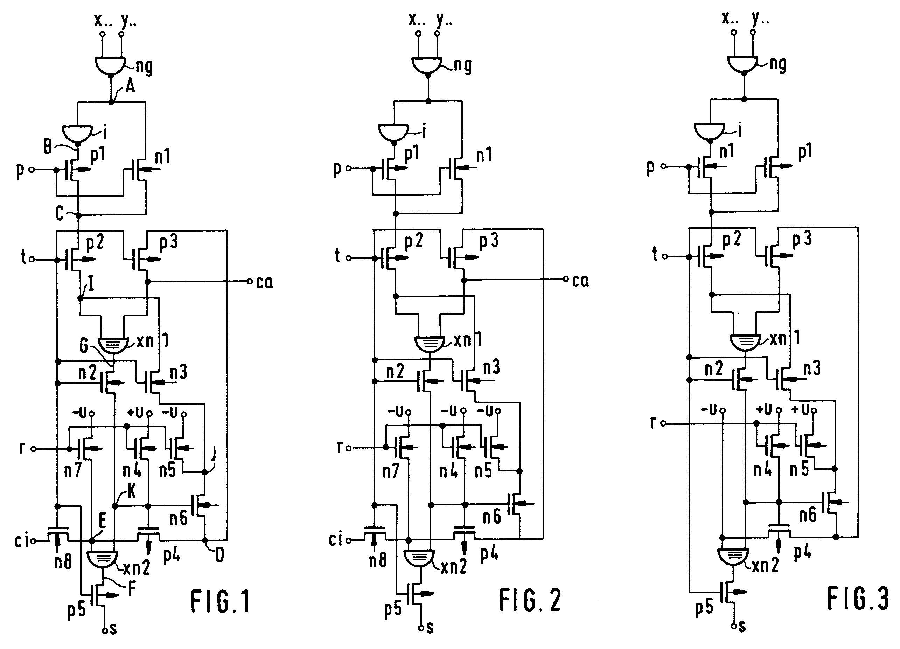

Die CMOS-Multiplizier-Hauptstufe nach Fig. 1 besteht aus den darin gezeigten Teilen in der gezeichneten Zusammenschaltung. Am einen Eingang des NAND-Gatters ng liegt eine der Multiplikatorstellen x.. und am anderen Eingang eine der Multiplikandstellen y.. Am Ausgang des NAND-Gatters ng liegt die Serienschaltung aus dem Inverter i, dem gesteuerten Strompfad des ersten P-Transistors p1 und dem gesteuerten Strompfad des zweiten P-Transistors p2. Dem Gate des ersteren ist das Vorzeichensignal p und dem des letzteren das Taktsignal t zugeführt.

Zwischen dem Ausgang des NAND-Gatters ng und dem Verbindungspunkt der beiden P-Transistoren p1, p2 liegt der gesteuerte Strompfad des ersten N-Transistors n1, dessen Gate ebenfalls das Vorzeichensignal p zugeführt ist. Das Gate des dritten P-Transistors p3 liegt am Gate des zweiten P-Transistors p2, ist also ebenso wie dieses mit dem Taktsignal t gespeist.

Der eine Eingang des ersten EXNOR-Gatters xn1, das man auch als Äquivalenzgatter bezeichnen kann, ist mit dem anderen Ende der Serienschaltung i, p1, p2 und sein anderer Eingang mit dem einen Strompfadende des dritten P-Transistors p3 verbunden, das auch den Übertragausgang ca bildet. Am Ausgang des EXNOR-Gatters xn1 liegt das eine Strompfadende des zweiten N-Transistors n2, während das eine Strompfadende des dritten N-Transistors n3 am anderen Ende der Serienschaltung i, p1, p2 und somit auch am einen Eingang des EXNOR-Gatters xn1 liegt.

Zwischen dem positiven Pol +u der Betriebsspannungsquelle und dem anderen Strompfadende des zweiten N-Transistors n2 ist der gesteuerte Strompfad des vierten N-Transistors n4 angeordnet, während zwischen dem Bezugspunkt -u der Betriebsspannungsquelle und dem anderen Strompfadende des dritten N-Transistors n3 der gesteuerte Strompfad des fünften N-Transistors n5 liegt und zwischen dem jeweils anderen Strompfadende des fünften N-Transistors n5 und des dritten P-Transistors p3 der gesteuerte Strompfad des sechsten N-Transistors n6 eingefügt ist.

Am anderen Strompfandende des sechsten N-Transistors n6 liegt das eine Strompfadende des vierten P-Transistors p4, deren beide Gates miteinander verbunden sind und am Verbindungspunkt der anderen Strompfadenden des zweiten und des vierten N-Transistors n2, n4 angeschlossen sind.

Der eine Eingang des zweiten EXNOR-Gatters xn2 liegt am anderen Strompfadende des zweiten N-Transistors n2 und somit auch, wie eben erwähnt, an den Gates des vierten P- und des sechsten N-Transistors p4, n6 sowie am anderen Strompfadende des vierten N-Transistors n4. Zwischen dem Bezugspunkt -u und dem anderen Eingang des zweiten EXNOR-Gatters x2 liegt der gesteuerte Strompfad des siebten N-Transistors n7, dessen Gate zusammen mit denen des vierten und des fünften N-Transistors n4, n5 das Reset-Signal r zugeführt ist.

Zwischen dem Ausgang des zweiten EXNOR-Gatters xn2 und dem Summenausgang s liegt der gesteuerte Strompfad des fünften P-Transistors p5, während zwischen dem anderen Eingang des zweiten EXNOR-Gatters xn2 und dem Eingang für das Übertragsignal ci der gesteuerte Strompfad des achten N-Transistors n8 eingefügt ist, dessen Gate zusammen mit denen des zweiten, dritten und fünften P-Transistors p2, p3, p5 sowie des zweiten, dritten und achten N-Transistors n2, n3, n8 das Taktsignal t zugeführt ist.

Die CMOS-Multiplizier-Zwischenstufe nach Fig. 2 ist vom Aufbau her, also was die einzelnen Elemente und deren Zusammenschaltung betrifft, mit der Hauptstufe nach Fig. 1 bis auf das Unterscheidungsmerkmal identisch, daß der gesteuerte Strompfad des vierten N-Transistors n4 nicht wie in Fig. 1 am positiven Pol +u, sondern am Bezugspunkt -u der Betriebsspannungsquelle angeschlossen ist.

Im Vergleich zur Fig. 2 weist die CMOS-Multiplizier-Anfangsstufe nach Fig. 3 eine größere Zahl von Unterscheidungsmerkmalen gegenüber der Stufe nach Fig. 1 auf, die sich u.a. daraus ergeben, daß die Anfangsstufe keinen Übertrageingang ci benötigt. Somit entfällt in Fig. 3 der achte N-Transistor n8 nach Fig. 1. Daher kann auch der siebte N-Transistor n7 nach Fig. 1 entfallen, da nunmehr der andere Eingang des zweiten EXNOR-Gatters xn2 direkt mit dem Bezugspunkt -u verbunden werden kann. Ferner liegt der gesteuerte Strompfad des fünften N-Transistors n5 in Fig. 3 nicht wie in Fig. 1 und 2 am Bezugspunkt -u, sondern am positiven Pol +u der Betriebsspannungsquelle. Schließlich ist die Lage des ersten N- und des ersten P-Transistors n1, p1 gegenüber deren Lage in den Fig. 1 und 2 vertauscht: Am Ausgang des NAND-Gatters ng liegt in Fig. 3 der erste P-Transistor p1 und am Ausgang des Inverters i der erste N-Transistor n1.

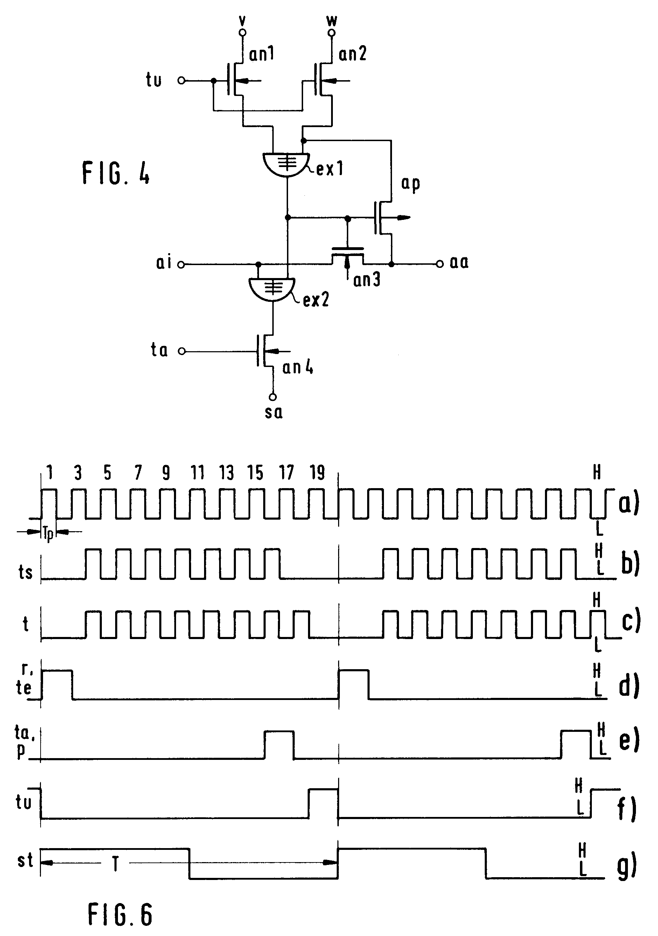

Die CMOS-Addierstufe nach Fig. 4 besteht aus den folgenden Elementen und Teilschaltungen in der angegebenen Zusammenschaltung: Der gesteuerte Strompfad des ersten N-Transistors an1 verbindet den Eingang für eine der Summandenstellen v mit dem einen Eingang des EXOR-Gatters ex1, das auch als Antivalenzgatter bezeichnet werden kann, während der andere Eingang des EXOR-Gatters ex1 über den gesteuerten Stormpfad des zweiten N-Transistors an2 mit dem Eingang für eine der Addendenstellen w verbunden ist; den Gates der beiden N-Transistoren an1, an2 ist das Übernahmesignal tu zugeführt; dem einen Eingang des zweiten EXOR-Gatters ex2 ist das Übertragsignal ai zugeführt, während sein anderer Eingang am Ausgang des ersten EXOR-Gatters ex1 liegt. Zwischen dem einen Eingang des zweiten EXOR-Gatters ex2 und dem Übertragausgang aa liegt der gesteuerte Strompfad des dritten N-Transistors an3, während zwischen dem anderen Eingang des ersten EXOR-Gatters ex2 und dem Übertragausgang aa liegt der gesteuerte Strompfad des dritten N-Transistors an3, während zwischen dem anderen Eingang des ersten EXOR-Gatters ex1 und dem Übertragausgang aa der P-Transistor ap liegt, dessen Gate zusammen mit dem des dritten N-Transistors an3 am Ausgang des ersten EXOR-Gatters ex1 angeschlossen ist; schließlich liegt zwischen dem Summenausgang sa und dem Ausgang des zweiten EXOR-Gatters ex2 der gesteuerte Strompfad des vierten N-Transistors an4, dessen Gate das Ausgabesignal ta zugeführt ist.

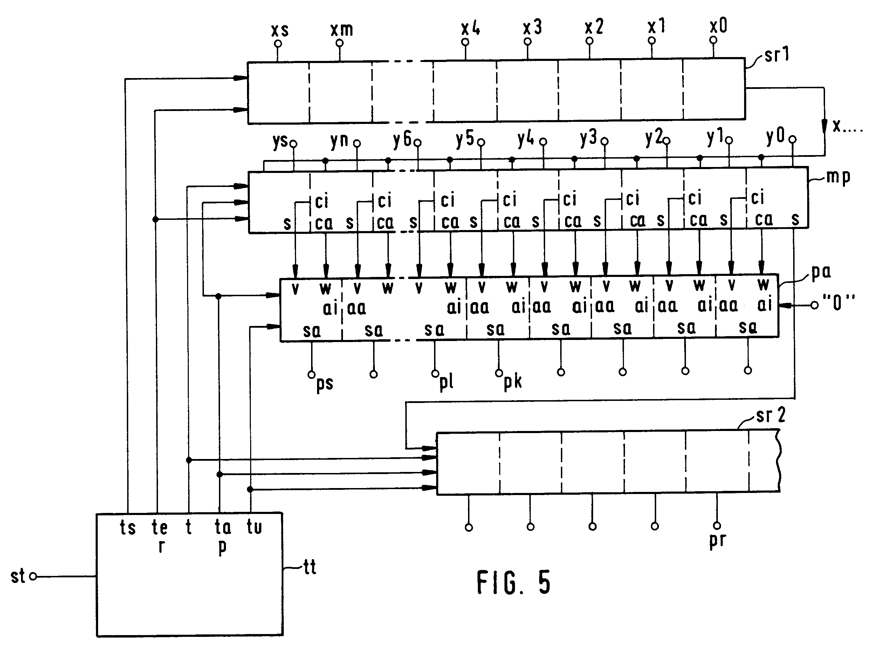

In Fig. 5 ist stark schematisiert gezeigt, wie ein CMOS-Multiplizierer nach der Erfindung aufgebaut ist. An den Paralleleingängen des (m+2)-stufigen ersten Schieberegisters sr1 liegen die m+2 Stellen x0..xs des Multiplikanden X; dabei gibt m die höchste Wertigkeit des Multiplikanden an. Von den m+2 Stufen sind die Stufen für x0, x1, x2, x3, x4, xm und xs gezeigt, wobei die letztere die Vorzeichenstufe ist, da ja voraussetzungsgemäß der CMOS-Multiplizierer Zweierkomplement-Dualzahlen verarbeiten soll, die bekanntlich dadurch definiert sind, daß bei einer negativen Zahl in der Vorzeichenstelle xs eine Eins auftritt, dagegen bei positiven Zahlen eine Null. Dem ersten Schieberegister sr1 ist das Schiebesignal ts und das Übernahmesignal te zugeführt, die beide aus dem Takttreiber tt stammen und deren spezielle Signalform noch beschrieben werden wird.

Im Gegensatz zu üblichen, meist aus einer zweidimensionalen, feldartigen Anordnung von Multiplizierstufen bestehenden Multiplizierern enthält der CMOS-Multiplizierer der Erfindung lediglich die einzige Kette mp von n+2 Multiplizierstufen, wobei mit n wiederum die höchste Wertigkeit des (n+2)-stelligen Multiplikators Y bezeichnet ist. In Fig. 5 sind von den n+2 Multiplizierstufen diejenigen für die Multiplikatorstellen y0, y1, y2, y3, y4, y5, y6, yn und ys gezeigt, wobei die letztere wiederum die Vorzeichenstelle ist.

An den Eingängen für die Multiplikatorstellen y.. und die Multiplikandstelle x.. liegen jeweils während der Taktperioden des Systemtakts st die entsprechenden Dualzahlen. Ihre Datenwechsel erfolgen während der L/H-Flanken des Systemtakts st. Die Dualzahlen können entseder rechtsbündig oder linksbündig sein, (der Betrag von rechsbündigen ist größer als eins, der von linksbündigen kleiner/gleich eins). Bei letzteren ist die Wertigkeit der höchstwertigen Stelle 2⁻¹ und die der weiteren Stellen nach rechts jeweils eine Zweierpotenz niedriger, und die Eins in der Vorzeichenstelle bei einer negativen Zahl ist als -2⁰ zu interpretieren. Somit ist die negativste Dualzahl 10000... des dargestellten Zahlenbereichs die Dezimalzahl -1.

Ferner ist die Vorzeichenstelle auch Vorkommastelle des durch die linksbündigen Zahlen repräsentierten Dualbruchs. Zum Beispiel ist die linksbündige Zahl 110 gleich dezimal -2⁻¹ gleich -0,5 oder die linksbündige Zahl 010 gleich dezimal +2⁻¹ gleich +0,5.

Bei der rechtsbündigen Darstellung ist, wenn zwei rechtsbündige Dualzahlen auf dieselbe Stellenzahl gebracht werden müssen, die Vorzeichenstelle durch weitere Stellen mit derselben Ziffer wie die Vorzeichenstelle zu ergänzen. Wenn also 101 (gleich dezimal -2¹-2⁰ gleich -3) auf die Stellenzahl von 00101 (gleich dezimal +2² + 2⁰ gleich 5) gebracht werden soll, wird die Dualzahl 101 zu 11101. Für beide Arten von Zahlen ist der CMOS-Multiplizierer der Erfindung geeignet.

Die Kette mp ist aus den drei Multiplizierstufen-Varianten der Fig. 1 bis 3 wie folgt zusammengesetzt: Die Anfangsstufe nach Fig. 3 ist der Vorzeichenstelle ys zugeordnet; für den Fall, daß m kleiner n ist, sind m+1 Multiplizier-Hauptstufen nach Fig. 1 und eine einzige Multiplizier-Zwischenstufe nach Fig. 2 vorgesehen, die an einer beliebigen Stelle hinter der Multiplizier-Anfangsstufe angeordnet sein kann; für den Fall, daß m größer oder gleich n ist, sind m+2 Multiplizier-Hauptstufen nach Fig. 1 vorzusehen, dagegen keine Multiplizier-Zwischenstufe nach Fig. 2 hinter der Multiplizier-Anfangsstufe nach Fig. 3 anzuordnen.

Alle Eingänge für die Multiplikatorstellen x.. der Multiplizierstufen nach den Fig. 1, 3 und ggf. 2 sind miteinander verbunden und liegen am Serienausgang des ersten Schieberegisters sr1. Ferner ist der Summenausgang s einer Multiplizierstufe mit dem Übertrageingang ci der direkt benachbarten Stufe niedrigerer Wertigkeit verbunden; dies ist in Fig. 5 schematisch dadurch angedeutet, daß innerhalb des eine Multiplizierstufe symbolisierenden Quadrats vom Ausgang s, der außerhalb des Quadrats zu einer Stufe des Paralleladdierers pa führt, innerhalb des Quadrats eine Verbindungsleitung zum Übertrageingang ci des rechts daneben liegenden Quadrats gezeichnet ist.

Mittels der Addierstufen nach Fig. 4 ist in Fig. 5 der (n+1)-stufige Paralleladdierer pa gebildet, dem das Übernahmesignal tu und das Ausgabesignal ta vom Takttreiber tt zugeführt sind. In jeder Stufe ist der Übertragausgang aa mit dem Übertrageingang ai der direkt benachbarten Stufe mit höherer Wertigkeit verbunden, wie die nebeneinander geschriebenen Bezugszeichen in den die Addierstufen repräsentierenden Quadraten andeuten. Am Übertrageingang ai der niederstwertigen Stufe liegt dauernd das der Null entsprechende Signal "0".

Die Multiplizierstufen der Kette mp und die Addierstufen des Paralleladdierers pa sind wie folgt miteinander verbunden: Der Übertragausgang ca der niederstwertigen Multiplizierstufe, also der für y0, liegt am Addendeingang w der niederstwertigen Addierstufe und der Summenausgang der zweitniederstwertigen Multiplizierstufe, also der für y1, an deren Summandeingang v; der Übertragausgang ca der zweitniederstwertigen Multiplizierstufe, also der für y1, liegt am Addendeingang w der zweitniederstwertigen Addierstufe und der Summenausgang der drittniederstwertigen Multiplizierstufe, also der für y2, an deren Summandeingang v; dieses Verbindungsschema setzt sich in den weiteren Stufen in gleicher Weise fort bis zur Multiplizierstufe für das Vorzeichensignal ys und die höchstwertige Addierstufe, an deren Ausgang das Vorzeichensignal ps des Produkts auftritt.

Der Summenausgang s der niederstwertigen Multiplizierstufe, also der für y0, liegt am Serieneingang des höchstens (m+3)-stufigen zweiten Schieberegisters sr2, an dessen Parallelausgängen zusammen mit den Summenausgängen der Stufen des Paralleladdierers pa die Stellen p.. des Produkts abzunehmen sind. Von diesen sind in Fig. 5 die Stellen ps, pk, pl und pr angegeben; ferner ist angedeutet, daß das zweite Schieberegister sr2 nicht seine Gesamtlänge zu haben braucht, sondern daß zu niedrigen Wertigkeiten hin Stufen fehlen können, deren Ausgangssignale in Abhängigkeit von der bei der Weitervararbeitung des Produkts erforderlichen Genauigkeit entfallen können. Dem zweiten Schieberegisters sr2 ist das Taktsignal t als Schiebesignal, das Übernahmesignal tu und das Ausgabesignal ta vom Takttreiber tt aus zugeführt.

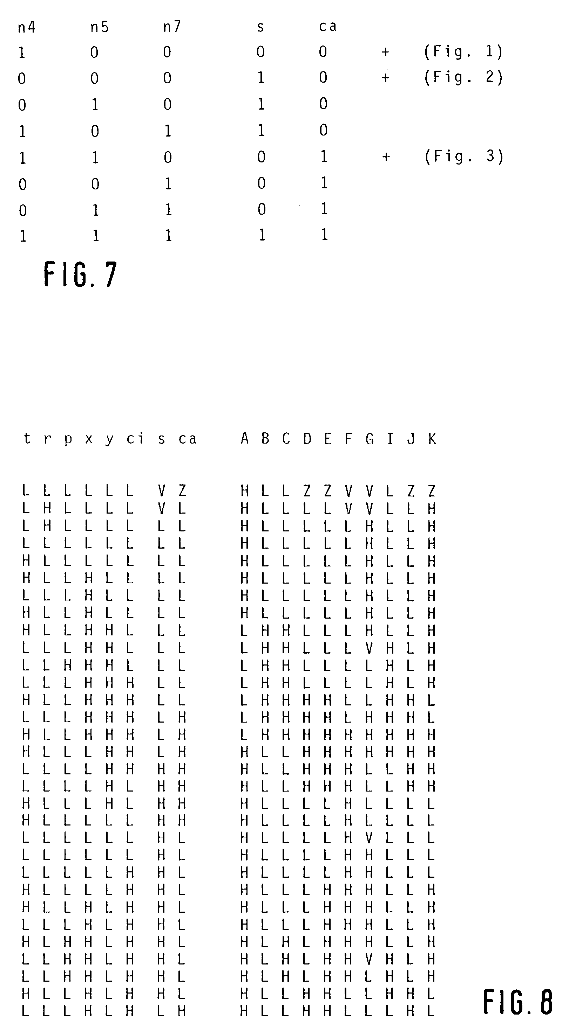

Der Takttreiber tt erzeugt aus dem Systemtakt st folgende Impulssignale, die jeweils dessen (m+4)-fache Frequenz haben und deren Impulse während dessen in 2(m+4) Teilperioden Tp unterteilt gedachten Periodendauer T auftreten und deren Kurvenform in Fig. 6 für den Fall m=6 gezeigt ist: Das Schiebesignal ts (Fig6b), das aus dem Burst vom m+1 Impulsen mit der Dauer einer Teilperiode Tp und mit einem ebenso langen gegenseitigen Abstand besteht, wobei dieser Burst zu Beginn der vierten Teilperiode beginnt; das Taktsignal t (Fig. 6c), das aus dem gleichzeitig mit dem Schiebesignal ts beginnenden, mit ihm gleichartigen Burst von jedoch m+2 Impulsen besteht; das mit dem Reset-Signal r identische Einlesesignal te (Fig. 6b), das aus einem während der ersten und der zweiten Teilperiode auftretenden Impuls besteht; das mit dem Ausgabesignal ta identische Vorzeichensignal p (Fig. 6e), das aus einem während der letzten Teilperiode des Bursts des Schiebetakts ts und während der anschließenden Teilperiode auftretenden Impuls besteht; und das Übernahmesignal tu (Fig. 6f), das aus einem während der letzten beiden Teilperioden auftretenden Impuls besteht.

Dabei kann der den Takttreiber tt ansteuernde Systemtakt st die in Fig. 6g gezeigte Kurvenform eines Rechtecksignals mit dem Impuls-Pausen-Verhältnis 1:1 haben.

In Fig. 6a ist schließlich der Verlauf des eingangs erwähnten, gegenüber dem Systemtakt st hochfrequenten Ringoszillator-Signals gezeigt, wie es bei der Anordnung nach der eingangs zweiterwähnten EP-A 255 960 auftritt. Dabei entspricht der Periodendauer Tp eine Halbperiode. Diese sind fortlaufend derart numeriert, daß jede Periodendauer mit einem Impuls durch eine der ungeraden Zahlen 1, 3.... 19 bezeichnet ist.

Aus der erläuterten gegenseitigen Verbindung der Multiplizierstufen bzw. der Addierstufen hinsichtlich der Summenausgänge und Übertragseingänge wird eine wesentliche Eigenschaft der Erfindung ersichtlich, daß nämlich in der Kette mp die Übertragsignale von den Stufen hoher Wertigkeit zu denen niedriger Wertigkeit sich fortpflanzen, während dies im Paralleladdierer pa gerade umgekehrt ist: hier wandern die Übertragsignale von niederwertigen zu höherwertigen Stufen. Aus diesem Grund ist es also sinnvoll, die links liegende Anfangsstufe des Multiplizierers als solche zu bezeichnen.

Eine weitere wichtige Eigenschaft der Erfindung besteht darin, daß das in einer Multiplizierstufe gebildete Übertragsignal, das über deren Übertragausgang ca, wie erwähnt, zum Addend-Eingang w der zugeordneten Addierstufe gelangt, nicht noch einer benachbarten Multiplizierstufe zugeführt zu werden braucht, sondern ausschließlich innerhalb derselben Multiplizierstufe verarbeitet wird.

Im folgenden wird die Arbeitsweise der einzelnen Stufen des CMOS-Multiplizierers nach der Erfindung näher erläutert. Dabei wird im wesentlichen auf die Multiplizierhauptstufe nach Fig. 1 Bezug genommen und nur dann die Multiplizierzwischenstufe nach Fig. 2 bzw. die Multiplizieranfangsstufe nach Fig. 3 erwähnt, wenn deren Funktion von der der Hauptstufe nach Fig. 1 abweicht. Die Funktionbeschreibung nimmt dabei laufend auch auf die in Fig. 6 gezeigten Signale und dere Pegel Bezug, die am rechten Rand der Fig. 6a bis g als H-Pegel bzw. L-Pegel eingetragen sind. Dabei ist der H-Pegel positiver als der L-Pegel. Wenn also wie bei CMOS-Schaltungen üblich der L-Pegel der Spannung des Schaltungsnullpunkts, also 0 Volt, entspricht, so ist der H-Pegel eine Spannung von einigen Volt. Da die Schaltung in positiver Logik arbeitet, entspricht der H-Pegel einer Eins bzw. der L-Pegel einer Null.

Das während einer Taktperiode T zuerst auftretende Signal mit einem H-Pegel ist das Reset-Signal r, dessen Dauer, wie bereits erwähnt wurde, gleiche zwei Periodendauern Tp ist. Während seinem H-Pegel hat keines der anderen an den Multiplizierstufen anliegenden Signale (außer den Datensignalen x, y) einen H-Pegel, sondern alle diese Signale haben den L-Pegel. Durch das Reset-Signal r werden alle diejenigen Verbindungspunkte der Multiplizierstufe, die ein temporäres Speicherverhalten aufweisen, gezielt auf den L-Pegel oder ggf. auf den H-Pegel gesetzt. Diese inneren Verbindungspunkte sind die folgenden: Die beiden Eingänge des EXNOR-Gatters xn2 und der Verbindungspunkt der N-Transistoren n3, n5, n6.

Die Reset-Wirkung läßt sich erreichen, weil in den Fig. 1 bis 3 "oberhalb" der mit ihrem Gate am Reset-Signal r liegenden Transistoren n4, n5, n7 vom Taktsignal t gesteuerte Transistoren angeordnet sind, nämlich die N-Transistoren n2, n3. Zu dieser als Transfertransistoren wirkenden Gruppe von Transistoren gehören ferner die P-Transistoren p2, p3, p5 sowie der N-Transistor n8.

An dieser Stelle sei erwähnt, daß die vom Reset-Signal r, die vom Taktsignal t und die vom Vorzeichensignal p gesteuerten (Transfer)-Transistoren in der tatsächlich realisierten Schaltung als die üblichen CMOS-Transmission-Gates ausgebildet sind; zur Vereinfachung der Beschreibung und der Ansprüche wurde jedoch darauf verzichtet, diese jeweils anzugeben; vielmehr wurde durch den unterschiedlichen Leitungstyp der (Transfer)-Transistoren lediglich die Wirkung des Transmission-Gates im Hinblick auf das Anliegen des Steuersignal angegeben.

Wie bereits erwähnt wurde, hat das Taktsignal t während des H-Pegels des Reset-Signals r einen L-Pegel. Somit sind die P-Transistoren p2, p3, p5 leitend und die N-Transistoren n2, n3, n8 gesperrt. Die N-Transistoren n4, n5, n7 dagegen sind vom H-Pegel des Reset-Signals r leitend gesteuert, so daß am mit dem N-Transistor n7 verbundenen Eingang des EXNOR-Gatters xn2 ein L-Pegel liegt und an seinem anderen Eingang über den N-Transistor n4 ein H-Pegel. Dadurch tritt an seinem Ausgang ebenfalls ein L-Pegel auf, der über den P-Transistor p5 zum Summenausgang s durchgeschaltet ist.

Ferner bewirkt der H-Pegel am mit dem N-Transistor n4 verbundenen Eingang des EXNOR-Gatters xn2, daß der N-Transistor n6 leitend gesteuert ist, so daß der Verbindungspunkt der P-Transistoren p3, p4 mit dem N-Transistor n6 den am Ausgang des N-Transistors n5 vorhandenen L-Pegel annimmt, wodurch dieser Verbindungspunkt sozusagen entladen ist. Da aber der P-Transistor p3, wie erwähnt, leitend ist, nimmt auch der Übertragasgang ca den L-Pegel an.

Von den mit dem Reset-Signal r gesteuerten Transistoren liegen in Fig. 1 die N-Transistoren n5, n7 am Bezugspunkt -u und der N-Transistor n4 am positiven Pol +u, so daß sie während des H-Pegels des Reset-Signals r zweimal den L-Pegel und einmal den H-Pegel in die Multiplizierstufen sozusagen einspeisen.

Der vom N-Transistor n3 "eingespeiste" H-Pegel ist am mit ihm verbundenen Eingang des EXNOR-Gatters xn2 während des Reset-Signals r erforderlich, da eine wichtige Eigenschaft bzw. Betriebsweise der Multiplizierstufe darin beteht, daß während der n+2 innerhalb einer Taktperiode T. ablaufenden n+2 Multiplikationen die in der Stufe auftretenden Signale nicht nur in ihrem "normalen", also nichtinvertierten, sondern auch in ihrem invertierten Zustand auftreten. Der mit den N-Transistoren n2, n4, n6 und dem P-Transistor p4 verbundene Eingang des EXNOR-Gatters xn2 ist aber ein Eingang, an dem die Signale in invertierter Form auftreten, so daß im Reset-Zustand an diesem Eingang ein H-Pegel auftreten muß.

Da in der Zwischenstufe nach Fig. 2 alle drei vom Reset-Signal r angesteuerten N-Transistoren n4, n5, n7 mit dem Bezugspunkt -u verbunden sind, wird während des H-Pegels des Reset-Signals r an beiden Eingängen des EXNOR-Gatters xn2 ein L-Pegel erzeugt, was an seinem Ausgang zu einem H-Pegel führt, so daß vom Reset-Signal r am Summenausgang s der Zwischenstufe nach Fig. 2 ein H-Pegel bewirkt wird.

Da der vom N-Transistor n5 durchgeschaltete L-Pegel jedoch wegen des vom N-Transistor n4 durchgeschalteten L-Pegels und des somit gesperrten N-Transistors n6 nicht weitergegeben werden kann, wird dies vom durch den L-Pegel leitend gesteuerten P-Transistor p4 bewerkstelligt, so daß auch in der Zwischenstufe nach Fig. 2 der Übertragausgang ca einen L-Pegel führt.

In der Anfangsstufe nach Fig. 3 schaltet der N-Transistor n5 im Gegensatz zu den Stufen nach den Fig. 1 und 2 einen H-Pegel zum N-Transistor n6 durch und dieser, da er wie in Fig. 1 vom vom N-Transistor n4 übertragenen H-Pegel leitend gesteuert ist, diesen H-Pegel zum Eingang des EXNOR-Gatters xn1 durch. In den Stufen nach den Fig. 1 und 2 liegt an diesem Eingang jeweils der Übertragausgang ca; da jedoch von der Anfangsstufe, wie die Fig. 5 zeigt, kein Übertragsignal an den Paralleladdierer pa weiterzugeben ist, hat die Anfangsstufe keinen Übertragausgang, das entsprechende Übertragsignal wird jedoch innerhalb der Stufe wie bei denen nach den Fig. 1 und 2 weiterverarbeitet.

Am Eingang für die Multiplikandstellen y.. der Multiplizierstufen liegt während einer Taktperiode des Systemtakts st die entsprechende Stelle des Multiplikanden, also beispielsweise die Stelle y4. Während einer Taktperiode T des Systemtakts st gelangen dagegen mit den Impulsen des Taktsignals t die einzelnen Stellen x.. des Multiplikators nacheinander an die miteinander verbundenen Multiplikatorstellen-Eingänge der Multiplizierstufen. Am Ausgang des NAND-Gatters ng liegt somit das Multiplikationssignal in inverser Form vor.

Schon während des H-Pegels des Reset-Signals r liegt die niederste Stelle x0 des Multiplikators an den Multiplizierstufen, da das Reset-Signal r mit dem Einlesesignal te des Schieberegisters sr1 und sein Serienausgang mit dem Ausgang der Stufe für die niederste Stelle identisch sind.

Das mittels des NAND-Gatters ng gebildete XY-Multiplikationssignal, das an dessen Ausgang invertiert auftritt, gelangt, da das Polaritätssignal p während des H-Pegels des Reset-Signals r einen L-Pegel hat, über den somit leitenden P-Transistor p1 als nichtinvertiertes Signal (wegen des Inverters i) bis zum Strompfad des P-Transistors p2. In der Anfangsstufe nach Fig. 3 ist dies jedoch nicht der Fall, denn dort gelangt das invertierte XY-Multiplikationssignal (= Ausgangssignal des NAND-Gatters ng) über den vom L-Pegel des Polaritätssignal p leitend gesteuerten P-Transistor p1 zum Strompfad des P-Transistors p2, da in Fig. 3 die Lage des N-Transistors n1 und des P-Transistors p1 gegenüber der der Figuren 1 und 2 vertauscht ist.

Nur wenn das Polaritätssignal p während der Periodendauern Nr. 16 und 17 nach Fig. 6, d.h., wie bereits erläutert wurde, während der letzten Teilperiode des Burst des Schiebetakts ts und während der anschließenden Teilperiode, einen H-Pegel aufweist, wird in der Hauptstufe nach Fig. 1 und der Zwischenstufe nach Fig. 2 das XY-Multiplikationssignal in invertierter Form zum Strompfad des P-Transistors p2 durchgeschaltet, dagegen während dieses H-Pegels in der Anfangsstufe nach Fig. 3 gerade in nichtinvertierter Form, da dann in den Fig. 1 bis 3 jeweils der N-Transistor n1 leitend ist.

Am Strompfad des P-Transistors p2 steht also, wie bereits erwähnt wurde, das XY-Multiplikationssignal nichtinvertiert oder invertiert an und somit an einem der drei Eingänge des Addiererteils der Multiplizierstufe; denn wie bei jeder Multiplizierstufe besteht auch die nach der Erfindung aus einer die XY-Multiplikation vornehmenden UND-Verknüpfung mit nachfolgendem Addiererteil. Der zweite Eingang des Addiererteils ist der Übertrageingang ci, der nach der Erfindung mit dem Summenausgang der nächsthöherwertigen Stufe der Kette mp verbunden ist. Der dritte Eingang des Addiererteils ist der Eingang für das eigene Übertragausgangssignal der Stufe, nämlich der mit dem Strompfad des P-Transistors p3 verbundene Eingang des EXNOR-Gatters xn1.

Bezüglich des Signaldurchlaufs durch den Addiererteil ist bei der Erfindung eine Zweiteilung vorgenommen, die durch eine Impulsdauer TP mit nachfolgender Impulspause gleicher Dauer des Taktsignals t bewirkt wird. Während dessen H-Pegel sind nämlich die N-Transistoren n2 bis n8, dagegen während desen L-Pegel die P-Transistoren p2 bis p5 leitend gesteuert. Dieses zeitlich nacheinander erfolgende Leitendsteuern der N- bzw. der P-Transistoren wirkt mit dem oben bereits erwähnten Speicherverhalten der dort genannten Verbindungspunkte zusammen. Somit gelangt während des H-Pegels des Taktsignals t das Ausgangssignal des EXNOR-Gatters xn1 und das Übertragsignal ci zu den beiden Eingängen des EXNOR-Gatters xn2. Diesem Gatter steht zur Bildung seines Ausgangssignals die Periodendauer Tp zur Verfügung, da erst während des L-Pegels des Taktsignals t sein Ausgangssignal zum Summenausgang s durchgeschaltet wird. Falls das Ausgangssignal des EXNOR-Gattes xn1 ein L-Pegel ist, der während des H-Pegels des Taktsignals t bis zum Gate des P-Transistors p2 gelangt, wird dieser leitend gesteuert und das Signal am Übertrageingang ci bis zum Strompfad des P-Transistors p3 durchgeschaltet. Von dort gelangt dieser Signalpegel während des L-Pegels des Taktsignals t zusammen mit dem Signalpegel am Strompfad des P-Transistors p4 zu jeweils einem Eingang des EXNOR-Gatters xn1.

Betrachtet man die drei Varianten der CMOS-Multiplizierstufe nach der Erfindung ohne die an die N-Transistoren n4, n5, n7 angelgten Potentiale +u, -u, so sind die mit ihnen nun nicht mehr verbundenen Strompfadenden drei Reset-Eingänge, über die Signale in die Stufe eingegeben werden können. Dadurch wird erreicht, daß mindestens eine zusätzliche Eins mittels der Stufe addiert werden kann, ohne dafür eine zusätzliche Addierstufe zu benötigen. Die dadurch möglichen Reset-Fälle sind in der Tabelle der Fig. 7 dargestellt, von denen die rechts mit einem Pluszeichen markierten Fälle die bei der Erfindung verwendeten sind. Die Tabelle zeigt die an die Strompfade der Transistoren n4, n5, n7 anzulegenden Signale und die an den Ausgängen s, ca auftretenden Signale, wobei 1 gleich einem H-Pegel und 0 gleich einem L-Pegel ist.

Wie die Fig. 7 zeigt, treten die mit + markierten Zustände 10 und 01 an den Ausgängen s, ca zusätzlich noch bei jeweils zwei anderen Reset-Signal-Kombinationen auf, die im Bedarfsfall ebenfalls gewählt werden können.

Der vollständige Signaldurchlauf einer Multiplizierstufe nach Fig. 1 mit allen auftretenden Signaländerungen an den einzelnen Eingängen, Ausgängen und Knotenpunkten A...K ergibt sich aus der Tabelle der Fig. 8.

Ein V bedeutet, daß das Potential dieses Punktes zu diesem Zeitpunkt (noch) unbestimmt ist, also noch nicht den H- oder L-Pegel (wieder) erreicht hat. Ein Z bedeutet, daß das Potential dieses Punktes zu diesem Zeitpunkt noch "unbekannt" ist. Die Tabelle der Fig. 8 ist so aufgebaut, daß immer dann zur nächsten Zeile übergangen wird, wenn mindestens ein Signalwechsel stattgefunden hat.

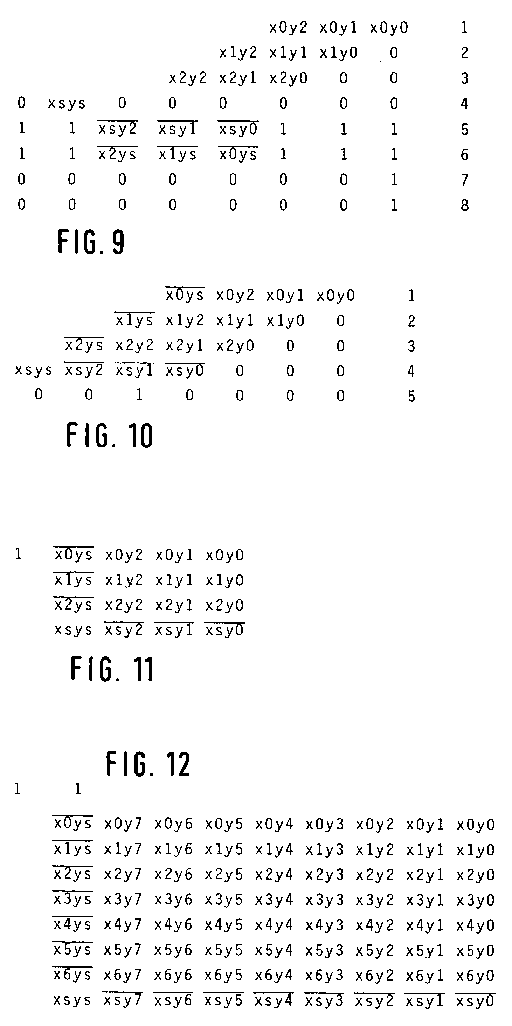

Zur weiteren Erläuterung der Erfindung und der Funktionsweise wird das ihr zugrunde liegende Multiplizierprinzip nun näher dargelegt, das eine Weiterbildung des Prinzips der Zweierkomplement-Dualzahlen-Multiplizierers nach "IEEE Trans. Comp.", 1973, Seiten 1045 bis 1047 ist. Danach werden z.B. die beiden Dualzahlen xs x2 x1 x0 und ys y2 y1 y0 nach dem Schema der Tabelle der Fig. 9 miteinander multipliziert. Die Zahlen in der rechten äußeren Spalte dienen der Zeilennumerierung der Tabelle.

Die in den Zeilen 1 bis 6 stehenden x..-y..-Produkte sind die in den an diesen Stellen angeordneten Multiplizierstufen gebildeten Teilprodukte der einzelnen Stellen jeder der beiden Dualzahlen. Die Anordnung des Schemas ist so gewählt, daß das Ergebnis eines Teilprodukts, also das Summensignal, senkrecht nach unten in die dort angeordnete Multiplizierstufe der nächsten Zeile und das Übertragssignal dieses Teilprodukts nach links unten in die zur das Summensignal erhaltenden Stufe benachbarte Stufe eingespeist wird.

In den Zeilen 1 bis 3 werden zunächst diejenigen Teilprodukte gebildet, die Stellen mit Zweierwertigkeit enthalten, also die Teilprodukte der Stellen x0, x1, x2; y0, y1, y2. In Zeile 4 wird das Teilprodukt der Vorzeichenstellen xs, ys gebildet. Die Null in den einzelnen Positionen der Zeilen 1 bis 4 gibt an, daß die dort vorhandenen Multiplizierstufen keine xy-Eingangssignale erhalten, sondern lediglich die erwähnten Summen- und/oder Übertragssignale.

Da Zweierkomplementzahlen multipliziert werden, sind die Zeilen 5 bis 8 erforderlich. In Zeilen 5 und 6 erfolgt die bei der Zweierkomplementierung erforderliche Invertierung der Eingangssignale, woraus sich die Einsen, die invertierte Nullen sind, erklären. Die invertierten Teilprodukte sind diejenigen, die die Vorzeichenstellen xs; ys der einen Dualzahl jeweils mit den restlichen Stellen y1, y2, y3; x1, x2, x3 der anderen Dualzahl bilden. Da bekanntlich bei der Zweierkomplementierung zusätzlich zu der erläuterten Invertierung noch eine Eins zum Ergebnis der Invertierung addiert werden muß, steht in den Zeilen 7 und 8 jeweils eine Eins in der niederstwertigen Position.

Das Schema der Tabelle der Fig. 9 wird wesentlich einfacher, wenn die Multiplikation der beiden größten negativen Zahlen bei vorgegebener Stellenzahl, also z.B. die Multiplikation 1000 mal 1000, ausgeschlossen wird, da dann keine Stufen für das Übertragsignal der Vorzeichenstellen erforderlich sind, also die am weitesten links stehende Spalte der Fig. 9 entfallen kann. Aus dem Schema der Fig. 9 wird somit das der Tabelle der Fig. 10, die rechts außen wieder die Zeilennumerierung hat.

Auch bei diesem Schema wird wie bei Fig. 9 die Summe senkrecht nach unten und der Übertrag nach links unten weitergeleitet. Gegenüber Fig. 9 ist zudem eine Umordnung vorgenommen, die aufgrund des für Additionen gültigen Kommutativgesetzes erlaubt ist, d.h., es wurde die Reihenfolge von in einer Spalte des Tabelle stehenden Teilprodukten verändert. Die in den Zeilen 5 bis 8 der Fig. 9 stehenden Einsen wurden durch Ausführung des Addition zusammengefaßt: Die in Zeilen 5 und 6 unter xsys stehenden beiden Einsen ergeben Null, also sind zwei Nullen am Platz der Einsen zu schreiben, und die Eins des Übertrags wird unterdrückt, da die links außen stehende Spalte der Fig. 9 bei Fig. 10 wie erwähnt entfällt; die beiden rechts außen stehenden Einsen in den Zeilen 7 und 8 ergeben zwei Nullen an den Plätzen der Einsen und eine Eins in Zeile 7 und in der links daneben liegenden Spalte; da somit Zeile 8 nur noch Nullen enthält, entfällt diese ebenfalls; die beiden rechts außen stehenden Einsen in Zeilen 5 und 6 ergeben eine Übertrags-Eins in Zeile 5 der Spalte 4.

Durch Ändern der Richtung der Weitergabe des Summenergebnisses von oben nach unten in nach rechts unten und des Übertragsergebnisses von nach links unten in senkrecht nach unten ergibt sich das Schema der Tabelle der Fig. 11.

Die links außen oben stehende Eins ergibt sich durch Anwendung des Kommutativgesetzes auf die dritte Spalte von links der Fig. 10.

Die bisherige Erläuterung des der Erfindung zugrundeliegenden Multiplizierprinzips betraf das Produkt zweier Dualzahlen mit gleicher Stellenzahl, in dessen Schema links oben eine einzige Eins zu addieren ist.

Bei Produkten zweier Dualzahlen mit unterschiedlicher Stellenzahl sind p+1 Einsen in einer ersten Zeile zu addieren, wobei p die Stellenzahldifferenz der beiden Dualzahlen ist.

Die Tabelle der Fig. 12 zeigt das der Tabelle der Fig. 11 entsprechende Schema für einen achtstelligen Multiplikanden X und einen neustelligen Multiplikator Y (jeweils die Vorzeichenstelle mitgezählt), wie dies für einen realisierten Multiplizierer nach der Erfindung zutrifft.

Die der Stellenzahl des Multiplikanden X gleiche Anzahl an Zeilen (=8) der Fig. 12 wird nun bei der Erfindung durch Anwendung des Parallel-Serien-Prinzips in die Anzahl 1 überführt, wie dies die folgende Zeile veranschaulicht:
xmys xmy7 xmy6 xmy5 xmy4 xmy3 xmy2 xmy1 xmy0
Mit m ist dabei der durch die Serienverarbeitung im Takt des Taktsignals t sich verändernde Index des Multiplikanden X symbolisiert.

## Patentansprüche

1. CMOS-Multiplizier-Hauptstufe einer CMOS-Parallel-Serien-Multiplizierschaltung für Zweierkomplement-Dualzahlen, wobei im obengenannten CMOS-Multiplizierer in absteigender Wertigkeit eine CMOS-Multiplizier-Anfangsstufe, an einer beliebigen Stelle danach gegebenenfalls eine CMOS-Multiplizier-Zwischenstufe und eine vorgegebene Anzahl der CMOS-Multiplizier-Hauptstufen zu einer einzigen Kette hintereinandergeschaltet sind und wobei die CMOS-Multiplizier-Hauptstufe aus folgenden Schaltungsteilen besteht:
- einem NAND-Gatter (ng), dessen einem Eingang eine der Multiplikatorstellen (x..) und dessen anderem Eingang eine der Multiplikandstellen (y..) zugeführt ist,
- einer am Ausgang des NAND-Gatters (ng) liegenden Serienschaltung aus einem Inverter (i), aus dem gesteuerten Strompfad eines ersten und dem eines zweiten P-Transistors (p1, p2),
- einem mit seinem gesteuerten Strompfad zwischen dem Ausgang des NAND-Gatters (ng) und dem Verbindungspunkt der beiden P-Transistoren (p1, p2) liegenden ersten N-Transistor (n1), dessen Gate zusammen mit dem des ersten P-Transistors ein Vorzeichensignal (p) zugeführt ist,
- einem mit seinem Gate am Gate des zweiten P-Transistors (p2) liegenden dritten P-Transistor (p3),
- einem ersten EXNOR-Gatter (xn1), dessen einer Eingang mit dem anderen Ende der Serienschaltung (i, p1, p2) und dessen anderer Eingang mit dem einen Strompfadende des dritten P-Transistors (p3) verbunden ist, das den Übertragausgang (ca) bildet,
- einem mit seinem einen Strompfadende am Ausgang des ersten EXNOR-Gatters (xn1) liegenden zweiten N-Transistor (n2),
- einem mit seinem einen Strompfadende am anderen Ende der Serienschaltung (i, p1, p2) liegenden dritten N-Transistor (n3),
- einem mit seinem gesteuerten Strompfad zwischen dem positiven Pol (+u) einer Betriebsspannungsquelle und dem anderen Strompfadende des zweiten N-Transistors (n2) liegenden vierten N-Transistor (n4),
- einem mit seinem gesteuerten Strompfad zwischen dem Bezugspunkt (-u) der Betriebsspannungsquelle und dem anderen Strompfadende des dritten N-Transistors (n3) liegenden fünften N-Transistor (n5),
- einem mit seinem gesteuerten Strompfad zwischen dem jeweils anderen Strompfadende des fünften N-Transistors (n5) und des dritten P-Transistors (p3) liegenden sechsten N-Transistor (n6),
- einem mit seinem einen Strompfadende am anderen Strompfadende des sechsten N-Transistors (n6) liegenden vierten P-Transistor (p4), deren beide Gates am Verbindungspunkt der anderen Strompfadenden des zweiten und des vierten N-Transistors (n2, n4) angeschlossen sind,
- einem zweiten EXNOR-Gatter (xn2), dessen einer Eingang mit dem anderen Strompfadende des zweiten N-Transistors (n2) verbunden ist,
- einem mit seinem gesteuerten Strompfad zwischen dem Bezugspunkt (-u) und dem anderen Eingang des zweiten EXNOR-Gatters (xn2) liegenden siebten N-Transistor (n7), dessen Gate zusammen mit denen des vierten und des fünften N-Transistors (n4, n5) ein Reset-Signal (r) zugeführt ist,
- einem mit seinem gesteuerten Strompfad zwischen dem Ausgang des zweiten EXNOR-Gatters (xn2) und dem Summenausgang (s) liegenden fünften P-Transistor (p5), und
- einem mit seinem gesteuerten Strompfad zwischen dem anderen Eingang des zweiten EXNOR-Gatters (xn2) und dem Eingang für ein Übertragsignal (ci) liegenden achten N-Transistor (n8), dessen Gate zusammen mit denen des zweiten, dritten und fünften P-Transistors (p2, p3, p5) sowie des zweiten und dritten N-Transistors (n2, n3) ein Taktsignal (t) zugeführt ist.

2. CMOS-Multiplizier-Zwischenstufe einer CMOS-Parallel-Serien-Multiplizierschaltung für Zweierkomplement-Dualzahlen, wobei im obengenannten CMOS-Multiplizierer in absteigender Wertigkeit eine CMOS-Multiplizier-Anfangsstufe, an einer beliebigen Stelle danach die CMOS-Multiplizier-Zwischenstufe und eine vorgegebene Anzahl von CMOS-Multiplizier-Hauptstufen zu einer einzigen Kette hintereinandergeschaltet sind und wobei die CMOS-Multiplizier-Zwischenstufe folgende Teilschaltungen enthält:
- ein NAND-Gatter (ng), dessen einem Eingang eine der Multiplikatorstellen (x..) und dessen anderem Eingang eine der Multiplikandstellen (y..) zugeführt ist,
- einer am Ausgang des NAND-Gatters (ng) liegenden Serienschaltung aus einem Inverter (i) und einem gesteuerten Strompfad eines ersten und eines zweiten P-Transistors (p1, p2),
- einen mit seinem gesteuerten Strompfad zwischen dem Ausgang des NAND-Gatters (ng) und dem Verbindungspunkt der beiden P-Transistoren (p1, p2) liegenden ersten N-Transistor (n1), dessen Gate zusammen mit dem des ersten P-Transistors ein Vorzeichensignal (p) zugeführt ist,
- einen mit seinem Gate am Gate des zweiten P-Transistors (p2) liegenden dritten P-Transistor (p3),
- ein erstes EXNOR-Gatter (xn1), dessen einer Eingang mit dem anderen Ende der Serienschaltung (i, p1, p2) und dessen anderer Eingang mit dem einen Strompfadende des dritten P-Transistors (p3) verbunden ist, das einen Übertragausgang (ca) bildet,
- einen mit seinem einen Strompfadende am Ausgang des ersten EXNOR-Gatters (xn1) liegenden zweiten N-Transistor (n2),
- einen mit seinem einen Strompfadende am anderen Ende der Serienschaltung (i, p1, p2) liegenden dritten N-Transistor (n3),
- einen mit seinem gesteuerten Strompfad zwischen einem Bezugspunkt (-u) der Betriebsspannungsquelle und dem anderen Strompfadende des zweiten N-Transistors (n2) liegenden vierten N-Transistor (n4),
- einen mit seinem gesteuerten Strompfad zwischen dem Bezugspunkt (-u) einer Betriebsspannungsquelle und dem anderen Strompfadende des dritten N-Transistors (n3) liegenden fünften N-Transistor (n5),
- einen mit seinem gesteuerten Strompfad zwischen dem jeweils anderen Strompfadende des fünften N-Transistors (n5) und des dritten P-Transistors (p3) liegenden sechsten H-Transistor (n6),
- einen mit seinem einen Strompfadende am anderen Strompfadende des sechsten N-Transistors (n6) liegenden vierten P-Transistor (p4), deren beide Gates am Verbindungspunkt der anderen Strompfadenden des zweiten und des vierten N-Transistors (n2, n4) angeschlossen sind,
- ein zweites EXNOR-Gatter (xn2), dessen einer Eingang mit dem anderen Strompfadende des zweiten N-Transistors (n2) verbunden ist,
- einen mit seinem gesteuerten Strompfad zwischen dem Bezugspunkt (-u) und dem anderen Eingang des zweiten EXNOR-Gatters (xn2) liegenden siebten N-Transistor (n7), dessen Gate zusammen mit denen des vierten und des fünften N-Transistors (n4, n5) ein Reset-Signal (r) zugeführt ist,
- einen mit seinem gesteuerten Strompfad zwischen dem Ausgang des zweiten EXNOR-Gatters (xn2) und einem Summenausgang (s) liegenden fünften P-Transistor (p5), und
- einen mit seinem gesteuerten Strompfad zwischen dem anderen Eingang des zweiten EXNOR-Gatters (xn2) und einem Eingang für ein Übertragssignal (ci) liegenden achten N-Transistor (n8), dessen Gate zusammen mit denen des zweiten, dritten und fünften P-Transistors (p2, p3, p5) sowie des zweiten und dritten N-Transistors (n2, n3) ein Taktsignal (t) zugeführt ist.

3. CMOS-Multiplizier-Anfangsstufe einer CMOS-Parallel-Serien-Multiplizierschaltung für Zweierkomplement-Dualzahlen, wobei im obengenannten CMOS-Multiplizierer in absteigender Wertigkeit die CMOS-Multiplizier-Anfangsstufe, an einer beliebigen Stelle danach gegebenenfalls eine CMOS-Multiplizier-Anfangsstufe, an einer beliebigen Stelle danach gegebenenfalls eine CMOS-Multiplizier-Zwischenstufe und eine vorgegebene Anzahl von CMOS-Multiplizier-Hauptstufen zu einer einzigen Kette hintereinandergeschaltet sind und wobei die CMOS-Multiplizier-Anfangsstufe aus folgenden Schaltungsteilen besteht:
- einem NAND-Gatter (ng), dessen einem Eingang eine der Multiplikatorstellen (x..) und dessen anderem Eingang eine der Multiplikandstellen (y..) zugeführt ist,
- einer am Ausgang des NAND-Gatters (ng) liegenden Serienschaltung aus einem Inverter (i) und aus dem gesteuerten Strompfad eines ersten N-Transistors (n1),
- einem mit seinem gesteuerten Strompfad zwischen dem Ausgang des NAND-Gatters (ng) und dem anderen Strompfadende des ersten N-Transistors (n1) liegenden ersten P-Transistor (p1), dessen Gate zusammen mit dem des ersten N-Transistors ein Vorzeichensignal (p) zugeführt ist,
- einem mit seinem einen Strompfadende am Strompfadverbindungspunkt des ersten N- und des ersten P-Transistors liegenden zweiten P-Transistors (p2),
- einem mit seinem Gate am Gate des zweiten P-Transistors (p2) liegenden dritten P-Transistor (p3),
- einem ersten EXNOR-Gatter (xn1), dessen einer Eingang mit dem anderen Strompfadende des zweiten P-Transistors (p2) und dessen anderer Eingang mit dem einen Strompfadende des dritten P-Transistors (p3) verbunden ist,
- einem mit seinem einen Strompfadende am Ausgang des ersten EXNOR-Gatters (xn1) liegenden zweiten N-Transistor (n2),
- einem mit seinem einen Strompfadende am Strompfadende des zweiten P-Transistors (p2) liegenden dritten N-Transistor (n3),
- einem mit seinem gesteuerten Strompfad zwischen dem positiven Pol (+u) einer Betriebsspannungsquelle und dem anderen Strompfadende des zweiten N-Transistors (n2) liegenden vierten N-Transistor (n4),
- einem mit seinem gesteuerten Strompfad zwischen dem positiven Pol (+u) und dem anderen Strompfadende des dritten N-Transistors (n3) liegenden fünften N-Transistor (n5), dessen Gate zusammen mit dem des vierten N-Transistors (n4) ein Reset-Signal (r) zugeführt ist,
- einem mit seinem gesteuerten Strompfad zwischen dem jeweils anderen Strompfadende des fünften N-Transistors (n5) und des dritten P-Transistors (p3) liegenden sechsten N-Transistor (n6),
- einem mit seinem einen Strompfadende am anderen Strompfadende des sechsten N-Transistors (n6) liegenden vierten P-Transistor (p4), deren beide Gates am Verbindungspunkt der anderen Strompfadenden des zweiten und des vierten N-Transistors (n2, n4) angeschlossen sind,
- einem zweiten EXNOR-Gatter (xn2), dessen einer Eingang mit dem anderen Strompfadende des zweiten N-Transistors (n2) und dessen anderer Eingang mit dem Bezugspunkt (-u) der Betriebsspannungsquelle verbunden ist, und
- einem mit seinem gesteuerten Strompfad zwischen dem Ausgang des zweiten EXNOR-Gatters (xn2) und dem Summenausgang (s) liegenden fünften P-Transistor (p5), dessen Gate zusammen mit denen des zweiten und dritten N-Transistors (n2, n3) sowie des zweiten und dritten P-Transistors (p2, p3) das Taktsignal (t) zugeführt ist.

4. CMOS-Multiplizierer mit Stufen nach den Ansprüchen 1 bis 3 für einen (m+2)-stelligen Multiplikanden (X) und einen (n+2)-stelligen Multiplikator (Y), wobei m und n deren jeweils höchste Wertigkeit ist und sie sich im Takt eines Systemtakts (st) ändern, ferner
gekennzeichnet durch folgende Merkmale:
- an den Paralleleingängen eines (m+2)-stufigen ersten Schieberegisters (sr1) liegen die m+2 Stellen (x0...xs) des Multiplikanden (X), dem ein Schiebesignal (ts) und ein Übernahme-Signal (te) zugeführt sind,
- eine einzige Kette (mp) von Multiplizierstufen, der ein Taktsignal (t), das Einlese-Signal (te) als Reset-Signal (r) und ein Vorzeichensignal (p) zugeführt sind, besteht aus der der Vorzeichenstelle (ys) des Multiplikators (Y) zugeordneten Multiplizier-Anfangsstufe und im Falle m kleiner n aus m Multiplizier-Hauptstufen sowie einer einzigen Multiplizier-Zwischenstufe die an einer beliebigen Stelle hinter der Anfangsstufe angeordnet ist, dagegen im Falle m größer oder gleich n aus m+2 Hauptstufen, wobei jeweils der Summenausgang (s) einer Stufe (z.B. für y4) mit dem Übertrageingang (ci) der direkt benachbarten Stufe (z.B. für y3) mit niedrigerer Wertigkeit verbunden ist,
- mittels hintereinandergeschalteter Addierstufen ist ein (n+1)-stufiger Paralleladdierer (pa) gebildet, dem ein Übernahmesignal (tu) und ein Ausgabesignal (ta) zugeführt sind und bei dem jeweils der Übertragausgang (aa) einer Stufe (z.B. für p1) mit dem Übertrageingang ai der direkt benachbarten Stufe (z.B. für pk) mit höherer Wertigkeit verbunden ist und am Übertrageingang der niederstwertigen Stufe dauernd ein der Null entsprechendes Signal ("0") liegt,
- die Multiplizierstufen und die Addierstufen sind wie folgt miteinander verbunden:
-- der Übertragausgang (ca) der niederstwertigen Multiplizierstufe (für y0) liegt am Addendeingang (w) der niederstwertigen Addierstufe und der Summenausgang (s) der zweitniederstwertigen Multiplizierstufe (für y1) am Summandeingang (v) dieser Addierstufe,
-- der Übertragausgang (ca) der zweitniederstwertigen Multiplizierstufe (für y1) liegt am Addendeingang (w) der zweitniederstwertigen Addierstufe und der Summenausgang (s) der drittniederstwertigen Multiplizierstufe (für y2) am Summandeingang (v) dieser Addierstufe,
-- und so weiter bis zur Multiplizierstufe für das Vorzeichensignal (ys) und die höchstwertige Addierstufe (für ps),
- der Summenausgang (s) der niederstwertigen Multiplizierstufe (für y0) liegt am Serieneingang eines höchstens (m+3)-stufigen zweiten Schieberegisters (sr2), an dessen Parallelausgängen zusammen mit den Summenausgängen (sa) des Paralleladdierers (pa) die Stellen (p..) des Produkts abzunehmen sind und dem das Taktsignal (t) als Schiebesignal, das Übernahmesignal (tu) und das Ausgabesignal (ta) zugeführt sind, und
- ein Takttreiber (tt) erzeugt aus einem Systemtakt (st) die folgenden Impulssignale, die jeweils dessen (m+4)-fache Frequenz haben und deren Impulse während dessen in 2(m+4) Teilperioden (Tp) unterteilt gedachten Periodendauer (T) auftreten:
-- das Schiebesignal (ts), das aus einem Burst von m+1 Impulsen mit der Dauer einer Teilperiode (Tp) und mit einem ebenso langen gegenseitigen Abstand besteht, welcher Burst zu Beginn der vierten Teilperiode beginnt,
-- das Taktsignal (t), das aus einem gleichzeitig mit dem Schiebesignal (ts) beginnenden, mit ihm gleichartigen Burst von jedoch m+2 Impulsen besteht,
-- das mit dem Reset-Signal (r) identische Übernahmesignal (te), das aus einem während der ersten und der zweiten Teilperiode auftretenden Impuls besteht,
-- das mit dem Ausgabesignal (ta) identische Vorzeichensignal (p), das aus einem während der letzten Teilperiode des Bursts des Schiebetakts (ts) und während der anschließenden Teilperiode auftretenden Impuls besteht, und
-- das Übernahmesignal (tu), das aus einem während der letzten beiden Teilperioden auftretenden Impuls besteht.

5. CMOS-Multiplizierer nach Anspruch 4, dadurch gekennzeichnet, daß die CMOS-Addierstufe für Zweierkomplement-Dualzahlen aus folgenden Teilschaltungen besteht:
- einem ersten und einem zweiten N-Transistor (an1, an2), deren Gates ein Übernahmesignal (tu) zugeführt ist,
- einem ersten EXOR-Gatter (ex1), dessen einem bzw. anderem Eingang über den gesteuerten Strompfad des ersten bzw. des zweiten N-Transistors (an1, an2) eine der Summandenstellen (v) bzw. eine der Addendenstellen (w) zugeführt ist,
- einem zweiten EXOR-Gatter (ex2), dessen einem Eingang ein Übertragsignal (ai) zugeführt ist und dessen anderer Eingang am Ausgang des ersten EXOR-Gatters (ex1) liegt,
- einem mit seinem gesteuerten Strompfad zwischen dem einen Eingang des zweiten EXOR-Gatters (ex2) und dem Übertragausgang (aa) liegenden dritten N-Transistor (an3),
- einem mit seinem gesteuerten Strompfad zwischen dem anderen Eingang des ersten EXOR-Gatters (ex1) und dem Übertragausgang (aa) liegenden P-Transistor (ap), dessen Gate zusammen mit dem des dritten N-Transistors (an3) am Ausgang des ersten EXOR-Gatters (ex1) liegt, und
- einem mit seinem gesteuerten Strompfad zwischen dem Ausgang des zweiten EXOR-Gatters (ex2) und dem Summenausgang (sa) liegenden vierten N-Transistor (an4), dessen Gate ein Ausgabesignal (ta) zugeführt ist.

## Claims

1. A CMOS main multiplying stage of a CMOS parallel/serial multiplication circuit for two's complement binary numbers, with a CMOS initial multiplying stage, if necessary a CMOS intermediate multiplying stage at an arbitrary point subsequent thereto, and a predetermined number of the CMOS main multiplying stages connected in series in the above-mentioned CMOS multiplier in descending significance to form a single chain, and with the CMOS main multiplying stage consisting of the following subcircuits:
- a NAND gate (ng) one input of which is fed with one of the multiplier bits (x..), and the other input of which is fed with one of the multiplicand bits (y..);
- a series combination of an inverter (i), the controlled current path of a first P-channel transistor (p1), and the controlled current path of a second P-channel transistor (p2), said series combination being connected to the output of the NAND gate (ng);
- a first N-channel transistor (n1) which has its controlled current path connected between the output of the NAND gate (ng) and the junction point of the two P-channel transistors (p1, p2) and whose gate is supplied with a sign signal (p), which is also applied to the gate of the first P-channel transistor (p1);
- a third P-channel transistor (p3) having its gate connected to the gate of the second P-channel transistor (p2);
- a first EXNOR gate (xn1) having one of its inputs connected to the other end of the series combination (i, p1, p2) and having its other input connected to one of the current-path ends of the third P-channel transistor (p3), said current-path end forming the carry output (ca);
- a second N-channel transistor (n2) having one of its current-path ends connected to the output of the first EXNOR gate (xn1);
- a third N-channel transistor (n3) having one of its current-path ends connected to the other end of the series combination (i, p1, p2);
- a fourth N-channel transistor (n4) having its controlled current path connected between the positive terminal (+u) of a supply-voltage source and the other current-path end of the second N-channel transistor (n2);
- a fifth N-channel transistor (n5) having its controlled current path connected between the reference point (-u) of the supply-voltage source and the other current-path end of the third N-channel transistor (n3);
- a sixth N-channel transistor (n6) having its controlled current path connected between the other current-path end of the fifth N-channel transistor (n5) and the other current-path end of the third P-channel transistor (p3);
- a fourth P-channel transistor (p4) having one of its current-path ends connected to the other current-path end of the sixth N-channel transistor (n6), with the gates of the fourth P-channel transistor (p4) and the sixth N-channel transistor (n6) connected to the junction of the other current-path ends of the second and fourth N-channel transistors (n2, n4);
- a second EXNOR gate (xn2) having one input connected to the other current-path end of the second N-channel transistor (n2);
- a seventh N-channel transistor (n7) which has its controlled current path connected between the reference point (-u) and the other input of the second EXNOR gate (xn2) and whose gate is supplied with a reset signal (r), which is also applied to the gates of the fourth and fifth N-channel transistors (n4, n5);
- a fifth P-channel transistor (p5) having its controlled current path connected between the output of the second EXNOR gate (xn2) and the sum output (s), and
- an eighth N-channel transistor (n8) which has its controlled current path connected between the other input of the second EXNOR gate (xn2) and the input for a carry signal (ci) and whose gate is supplied with a clock signal (t), which is also applied to the gates of the second, third, and fifth P-channel transistors (p2, p3, p5) and to the gates of the second and third N-channel transistors (n2, n3).

2. A CMOS intermediate multiplying stage of a CMOS parallel/serial multiplication circuit for two's complement binary numbers, with a CMOS initial multiplying stage, the CMOS intermediate multiplying stage at an arbitrary point subsequent thereto, and a predetermined number of CMOS main multiplying stages connected in series in the above-mentioned CMOS multiplier in descending significance to form a single chain, and with the CMOS intermediate multiplying stage containing the following subcircuits:
- a NAND gate (ng) one input of which is fed with one of the multiplier bits (x..), and the other input of which is fed with one of the multiplicand bits (y..);
- a series combination of an inverter (i), the controlled current path of a first P-channel transistor (p1), and the controlled current path of a second P-channel transistor (p2), said series combination being connected to the output of the NAND gate (ng);
- a first N-channel transistor (n1 ) which has its controlled current path connected between the output of the NAND gate (ng) and the junction point of the two P-channel transistors (p1, p2) and whose gate is supplied with a sign signal (p), which is also applied to the gate of the first P-channel transistor (p1);
- a third P-channel transistor (p3) having its gate connected to the gate of the second P-channel transistor (p2);
- a first EXNOR gate (xn1) having one of its inputs connected to the other end of the series combination (i, p1, p2) and having its other input connected to one of the current-path ends of the third P-channel transistor (p3), said current-path end forming a carry output (ca);
- a second N-channel transistor (n2) having one of its current-path ends connected to the output of the first EXNOR gate (xn1);
- a third N-channel transistor (n3) having one of its current-path ends connected to the other end of the series combination (i, p1, p2);
- a fourth N-channel transistor (n4) having its controlled current path connected between a reference point (-u) of the supply-voltage source and the other current-path end of the second N-channel transistor (n2);
- a fifth N-channel transistor (n5) having its controlled current path connected between the reference point (-u) of a supply-voltage source and the other current-path end of the third N-channel transistor (n3);
- a sixth N-channel transistor (n6) having its controlled current path connected between the other current-path end of the fifth N-channel transistor (n5) and the other current-path end of the third P-channel transistor (p3);
- a fourth P-channel transistor (p4) having one of its current-path ends connected to the other current-path end of the sixth N-channel transistor (n6), with the gates of the fourth P-channel transistor (p4) and the sixth N-channel transistor (n6) connected to the junction of the other current-path ends of the second and fourth N-channel transistors (n2, n4);
- a second EXNOR gate (xn2) having one input connected to the other current-path end of the second N-channel transistor (n2);
- a seventh N-channel transistor (n7) which has its controlled current path connected between the reference point (-u) and the other input of the second EXNOR gate (xn2) and whose gate is supplied with a reset signal (r), which is also applied to the gates of the fourth and fifth N-channel transistors (n4, n5);
- a fifth P-channel transistor (p5) having its controlled current path connected between the output of the second EXNOR gate (xn2) and a sum output (s), and
- an eighth N-channel transistor (n8) which has its controlled current path connected between the other input of the second EXNOR gate (xn2) and an input for a carry signal (ci) and whose gate is supplied with a clock signal (t), which is also applied to the gates of the second, third, and fifth P-channel transistors (p2, p3, p5) and to the gates of the second and third N-channel transistors (n2, n3).

3. A CMOS initial multiplying stage of a CMOS parallel/serial multiplication circuit for two's complement binary numbers, with the CMOS initial multiplying stage, if necessary a CMOS intermediate multiplying stage at an arbitrary point subsequent thereto, and a predetermined number of the CMOS main multiplying stages connected in series in the above-mentioned CMOS multiplier in descending significance to form a single chain, and with the CMOS initial multiplying stage consisting of the following subcircuits:
- a NAND gate (ng) one input of which is fed with one of the multiplier bits (x..), and the other input of which is fed with one of the multiplicand bits (y..);
- a series combination of an inverter (i) and the controlled current path of a first N-channel transistor (n1), said series combination being connected to the output of the NAND gate (ng);
- a first P-channel transistor (p1) which has its controlled current path connected between the output of the NAND gate (ng) and the other current-path end of the first N-channel transistor (n1) and whose gate is supplied with a sign signal (p), which is also applied to the gate of the first N-channel transistor (n1);
- a second P-channel transistor (p2) having one of its current-path ends connected to the junction of the current paths of the first N-channel transistor and first P-channel transistor;
- a third P-channel transistor (p3) having its gate connected to the gate of the second P-channel transistor (p2);
- a first EXNOR gate (xn1) having one input connected to the other end of the controlled current path of the second P-channel transistor (p2) and having its other input connected to one current-path end of the third P-channel transistor (p3);
- a second N-channel transistor (n2) having one of its current-path ends connected to the output of the first EXNOR gate (xn1);
- a third N-channel transistor (n3) having one of its current-path ends connected to the current-path end of the second P-channel transistor (p2);
- a fourth N-channel transistor (n4) having its controlled current path connected between the positive terminal (+u) of a supply-voltage source and the other current-path end of the second N-channel transistor (n2);
- a fifth N-channel transistor (n5) which has its controlled current path connected between the positive terminal (+u) and the other current-path end of the third N-channel transistor (n3) and whose gate is supplied with a reset signal (r), which is also applied to the gate of the fourth N-channel transistor (4);
- a sixth N channel transistor (n6) having its controlled current path connected between the other current-path end of the fifth N-channel transistor (n5) and the other current-path end of the third P-channel transistor (p3);
- a fourth P-channel transistor (p4) having one of its current-path ends connected to the other current-path end of the sixth N-channel transistor (n6), with the gates of the fourth P-channel transistor (p4) and the sixth N-channel transistor (n6) connected to the junction of the other current-path ends of the second and fourth N-channel transistors (n2, n4);
- a second EXNOR gate (xn2) having one of its inputs connected to the other current-path end of the second N-channel transistor (n2) and having its other input connected to the reference point (-u) of the supply-voltage source, and
- a fifth P-channel transistor (p5) which has its controlled current path connected between the output of the second EXNOR gate (xn2) and the sum output (s) and whose gate is supplied with a clock signal (t), which is also applied to the gates of the second and third N-channel transistors (n2, n3) and to the gates of the second and third P-channel transistors (p2, p3).

4. A CMOS multiplier comprising stages as claimed in claims 1 to 3 for an (m+2)-bit multiplicand (X) and an (n+2)-bit multiplier (Y), with m and n being the highest weights of the multiplicand (X) and multiplier (Y), respectively, and changing at the pulse-repetition rate of a system clock (st), further
characterized by the following features:
- The m+2 bits (x0...xs) of the multiplicand (X) are presented to the parallel inputs of an (m+2)-stage first shift register (sr1) to which a shift signal (ts) and an enable signal (te) are applied;
- a single chain (mp) of multiplying stages which is supplied with a clock signal (t), the enable signal (te) as the reset signal (r), and a sign signal (p) consists of the initial multiplying stage, assigned to the sign bit (ys) of the multiplier (Y), and, if m is less than n, of m main multiplying stages and a single intermediate multiplying stage which is located at an arbitrary point behind the initial stage, but if m is greater than or equal to n, of m+2 main stages, with the sum output (s) of a stage (e.g., for y4) connected to the carry input (ci) of the next less significant stage (e.g., for y3);
- series-connected adding stages form an (n+1)-stage parallel adder (pa) to which an input enable signal (tu) and a read signal (ta) are applied and in which the carry output (aa) of a stage (e.g., for pl) is connected to the carry input (ai) of the next more significant stage (e.g., for pk) and in which a signal corresponding to zero ("0") is constantly applied to the carry input of the least significant stage;
- the multiplying stages and the adding stages are interconnected as follows:
-- the carry output (ca) of the least significant multiplying stage (for y0) is connected to the addend input (w) of the least significant adding stage, and the sum output (s) of the second least significant multiplying stage (for y1 ) to the augend input (v) of said adding stage;
-- the carry output (ca) of the second least significant multiplying stage (for y1 ) is connected to the addend input (w) of the second least significant adding stage, and the sum output (s) of the third least significant multiplying stage (for y2) to the augend input (v) of said adding stage,
-- and so on up to the multiplying stage for the sign signal (ys) and the most significant adding stage (for ps);
- the sum output (s) of the least significant multiplying stage (for y0) is connected to the serial input of a maximally (m+3)-stage second shift register (sr2) whose parallel outputs, together with the sum outputs (sa) of the parallel adder (pa), provide the bits (p..) of the product and which is supplied with the clock signal (t) as a shift signal, the input enable signal (tu), and the read signal (ta), and
- a clock driver (tt) derives from a system clock (st) the following pulse signals, which have (m+4) times the frequency of the system clock (st) and whose pulses occur during the period (T) of the system clock (st), thought of as being divided into 2(m+4) subcycles (Tp):
-- the shift signal (ts), which consists of a burst of m+1 pulses having the duration of one subcycle (Tp) and a spacing equal to said duration, said burst beginning at the beginning of the fourth subcycle;
-- the clock signal (t), consisting of a burst which begins simultaneously with, and has the same shape as, the shift signal (ts) but consists of m+2 pulses.
-- the enable signal (te), which is identical with the reset signal (r) and consists of a pulse occurring during the first and second subcycles;
-- the sign signal (p), which is identical with the read signal (ta) and consists of a pulse occurring during the last subcycle of the burst of the shift signal (ts) and during the next subcycle, and
-- the input enable signal (tu), which consists of a pulse occurring during the last two subcycles.

5. A CMOS multiplier as claimed in claim 4, characterized in that the CMOS adding stage for two's complement binary numbers consists of the following subcircuits:
- a first N-channel transistor (an1) and a second N-channel transistor (an2) whose gates are supplied with an input enable signal (tu);
- a first EXOR gate (ex1) one input of which is fed with one of the augend bits (v) via the controlled current path of the first N-channel transistor (an1), and the other input of which is fed with one of the addend bits (w) via the controlled current path of the second N-channel transistor (an2);
- a second EXOR gate (ex2) one input of which is supplied with a carry signal (ai), and the other input of which is connected to the output of the first EXOR gate (ex1);
- a third N-channel transistor (an3) having its controlled current path connected between said one input of the second EXOR gate (ex2) and the carry output (aa);
- a P-channel transistor (ap) which has its controlled current path connected between the other input of the first EXOR gate (ex1) and the carry output (aa) and whose gate is connected, together with that of the third N-channel transistor (an3), to the output of the first EXOR gate (ex1), and
- a fourth N-channel transistor (an4) which has its controlled current path connected between the output of the second EXOR gate (ex2) and the sum output (sa) and whose gate is supplied with a read signal (ta).

## Revendications

1. Étage principal de multiplication CMOS d'un circuit multiplicateur CMOS parallèle-série pour des nombres binaires représentés selon un mode de complémentation à deux, dans lequel, dans le multiplicateur CMOS indiqué précédemment, un étage d'entrée du multiplicateur CMOS, éventuellement un étage intermédiaire du multiplicateur CMOS, disposé en aval en un emplacement quelconque, et un nombre prédéterminé des étages principaux du multiplicateur CMOS sont branchés en série, conformément à des poids décroissants, pour former une chaîne unique, et dans lequel l'étage principal du multiplicateur CMOS est constitué par les éléments de circuit suivants :
- une porte NON-ET (ng), à une entrée de laquelle est envoyée l'un des chiffres (x...) du multiplicateur et à l'autre entrée de laquelle est envoyé l'un des chiffres (y...) du multiplicande,
- un circuit série, qui est raccordé à la sortie de la porte NON-ET (ng) et est constitué par un inverseur (i), par la voie de courant commandée d'un premier transistor (p1) de type P et par la voie de courant commandée d'un second transistor (p2) de type P,
- un premier transistor (n1) de type N, dont la voie de courant commandée est disposée entre la sortie de la porte NON-ET (ng) et le point de jonction des deux transistors (p1, p2) de type P et dont la grille reçoit, ainsi que celle du premier transistor de type P, un signal de signe (p),
- un troisième transistor (p3) de type P, dont la grille est raccordée à la grille du second transistor (p2) de type P,
- une première porte NON-OU-EXCLUSIF (xn1), dont une entrée est reliée à l'autre extrémité du circuit série (i, p1, p2) et dont l'autre entrée est reliée à une extrémité de la voie de courant du troisième transistor (p3) de type P, qui forme la sortie de report (ca),
- un second transistor (n2) de type N, dont l'extrémité de la voie de courant est située au niveau de la sortie de la première porte NON-OU-EXCLUSIF (xn1),
- un troisième transistor (n3) de type N, dont une extrémité de la voie de courant est située à l'autre extrémité du circuit série (i, p1, p2),
- un quatrième transistor (n4) de type N, dont la voie de courant commandée est située entre le pôle positif (+u) d'une source de tension de service et l'autre extrémité de la voie de courant du second transistor (n2) de type N,
- un cinquième transistor (n5) de type N, dont la voie de courant commandée est située entre le point de référence (-u) de la source de tension de service et l'autre extrémité de la voie de courant du troisième transistor (n3) de type N,
- un sixième transistor (n6) de type N, dont la voie de courant commandée est située entre l'autre extrémité respective de la voie de courant du cinquième transistor (n5) de type N et l'autre extrémité respective de la voie de courant du troisième transistor (p3) de type P,
- un quatrième transistor (p4) de type P, dont l'extrémité de la voie de courant est située à l'autre extrémité de la voie de courant du sixième transistor (n6) de type N et dont les deux grilles sont connectées au point de jonction des autres extrémités des voies de courant des second et quatrième transistors (n2, n4) de type N,
- une seconde porte NON-OU-EXCLUSIF (xn2), dont une entrée est reliée à l'autre extrémité de la voie de courant du second transistor (n2) de type N,
- un septième transistor (n7) de type N, dont la voie de courant commandée est située entre le point de référence (-u) et l'autre entrée de la seconde porte NON-OU-EXCLUSIF (xn2) et dont la grille reçoit, ainsi que les grilles des quatrième et cinquième transistors (n4, n5) de type N, un signal de remise à l'état initial (r),
- un cinquième transistor (p5) de type P, dont la voie de courant commandée est située entre la sortie de la seconde porte NON-OU-EXCLUSIF (xn2) et la sortie de somme (s), et
- un huitième transistor (n8) de type N, dont la voie de courant commandée est située entre l'autre entrée de la seconde porte NON-OU-EXCLUSIF (xn2) et l'entrée pour un signal de report (ci), et dont la grille reçoit, ainsi que les grilles des second, troisième et cinquième transistors (p2, p3, p5) de type P ainsi que les grilles des second et troisième transistors (n2, n3) de type N, un signal de cadence (t).

2. Étage intermédiaire de multiplication MOS d'un circuit multiplicateur CMOS parallèle-série pour des nombres binaires représentés selon un mode de complémentation à deux, dans lequel, dans le multiplicateur CMOS indiqué précédemment, un étage d'entrée du multiplicateur CMOS, un étage intermédiaire du multiplicateur CMOS, disposé en aval en un emplacement quelconque, et un nombre prédéterminé d'étages principaux du multiplicateur CMOS sont branchés en série, conformément à des poids décroissants, pour former une chaîne unique, et dans lequel l'étage intermédiaire du multiplicateur CMOS contient par les éléments de circuit suivants :
- une porte NON-ET (ng), à une entrée de laquelle est envoyé l'un des chiffres (x...) du multiplicateur et à l'autre entrée de laquelle est envoyé l'un des chiffres (y...) du multiplicande,
- un circuit série, qui est raccordé à la sortie de la porte NON-ET (ng) et est constitué par un inverseur (i) et par une voie de courant commandée de premier et second transistors (p1, p2) de type P,
- un premier transistor (n1) de type M, dont la voie de courant commandée est disposée entre la sortie de la porte NON-ET (ng) et le point de jonction des deux transistors (p1, p2) de type P et dont la grille reçoit, ainsi que celle du premier transistor de type P, un signal de signe (p),
- un troisième transistor (p3) de type P, dont la grille est raccordée à la grille du second transistor (p2) de type P,
- une première porte NON-OU-EXCLUSIF (xn1), dont une entrée est reliée à l'autre extrémité du circuit série (i, p1, p2) et dont l'autre entrée est reliée à une extrémité de la voie de courant du troisième transistor (p3) de type P, qui forme la sortie de report (ca),
- un second transistor (n2) de type N, dont l'extrémité de la voie de courant est située au niveau de la sortie de la première porte NON-OU-EXCLUSIF (xn1),
- un troisième transistor (n3) de type N, dont une extrémité de la voie de courant est située au niveau de l'autre extrémité du circuit série (i, p1, p2),
- un quatrième transistor (n4) de type N, dont la voie de courant commandée est située entre un point de référence (-u) de la source de tension de service et l'autre extrémité de la voie de courant du second transistor (n2) de type N,
- un cinquième transistor (n5) de type N, dont la voie de courant commandée est située entre le point de référence (-u) d'une source de tension de service et l'autre extrémité de la voie de courant du troisième transistor (n3) de type N,
- un sixième transistor (n6) de type N, dont la voie de courant commandée est située entre l'autre extrémité respective de la voie de courant du cinquième transistor (n5) de type N et l'autre extrémité respective de la voie de courant du troisième transistor (p3) de type P,
- un quatrième transistor (p4) de type P, dont l'extrémité de la voie de courant est située à l'autre extrémité de la voie de courant du sixième transistor (n6) de type N et dont les deux grilles sont connectées au point de jonction des autres extrémités des voies de courant des second et quatrième transistors (n2, n4) de type N,
- une seconde porte NON-OU-EXCLUSIF (xn2), dont une entrée est reliée à l'autre extrémité de la voie de courant du second transistor (n2) de type N,
- un septième transistor (n7) de type N, dont la voie de courant commandée est située entre le point de référence (-u) et l'autre entrée de la seconde porte NON-OU-EXCLUSIF (xn2) et dont la grille reçoit, ainsi que les grilles des quatrième et cinquième transistors (n4, n5) de type N, un signal de remise à l'état initial (r),
- un cinquième transistor (p5) de type P, dont la voie de courant commandée est située entre la sortie de la seconde porte NON-OU-EXCLUSIF (xn2) et une sortie de somme (s), et
- un huitième transistor (n8) de type N, dont la voie de courant commandée est située entre l'autre entrée de la seconde porte NON-OU-EXCLUSIF (xn2) et une entrée pour un signal de report (ci), et dont la grille reçoit, ainsi que les grilles des second, troisième et cinquième transistors (p2, p3, p5) de type P ainsi que les grilles des second et troisième transistors (n2, n3) de type N, un signal de cadence (t).

3. Étage d'entrée d'un multiplicateur CMOS d'un circuit multiplicateur parallèle-série CMOS parallèle-série pour des nombres binaires représentés selon un mode de complémentation à deux, dans lequel, dans le multiplicateur CMOS indiqué précédemment, un étage d'entrée du multiplicateur CMOS, éventuellement un étage intermédiaire du multiplicateur CMOS, disposé en aval en un emplacement quelconque, et un nombre prédéterminé d'étages principaux du multiplicateur CMOS sont branchés en série, selon des poids décroissants, pour former une chaîne unique, et dans lequel l'étage d'entrée du multiplicateur CMOS est constitué par les éléments de circuit suivants :
- une porte NON-ET (ng), à une entrée de laquelle est envoyé l'un des chiffres (x...) du multiplicateur et à l'autre entrée de laquelle est envoyé l'un des chiffres (y...) du multiplicande,
- un circuit série, qui est raccordé à la sortie de la porte NON-ET (ng) et est constitué par un inverseur (i) et par la voie de courant commandée d'un premier transistor (n1) de type N,
- un premier transistor (p1) de type P, dont la voie de courant commandée est disposée entre la sortie de la porte NON-ET (ng) et l'autre extrémité de la voie de courant du premier transistor (n1) de type N et dont la grille reçoit, ainsi que celle du premier transistor de type N, un signal de signe (p),
- un second transistor (p2) de type P, dont une extrémité de la voie de courant est située au point de jonction des voies de courant du premier transistor de type N et du premier transistor de type P,
- un troisième transistor (p3) de type P, dont la grille est raccordée à la grille du second transistor (p2) de type P,
- une première porte NON-OU-EXCLUSIF (xn1), dont une entrée est reliée à l'autre extrémité de la voie de courant du second transistor (p2) de type P et dont l'autre entrée est reliée à une extrémité de la voie de courant du troisième transistor (p3) de type P,
- un second transistor (n2) de type N, dont l'extrémité de la voie de courant est située au niveau de la sortie de la première porte NON-OU-EXCLUSIF (xn1),
- un troisième transistor (n3) de type N, dont une extrémité de la voie de courant est reliée à l'extrémité de la voie de courant du second transistor (p2) de type P,
- un quatrième transistor (n4) de type N, dont la voie de courant commandée située entre le pôle positif (+u) d'une source de tension de service et l'autre extrémité de la voie de courant du second transistor (n2) de type N,
- un cinquième transistor (n5) de type N, dont la voie de courant commandée est située entre le pôle positif (+u) et l'autre extrémité de la voie de courant du troisième transistor (n3) de type N, et dont la grille reçoit, ainsi que celle du transistor (n4) de type N, un signal de remise à l'état initial (r),
- un sixième transistor (n6) de type N, dont la voie de courant commandée est située entre l'autre extrémité respective de la voie de courant du cinquième transistor (n6) de type N et l'autre extrémité respective de la voie de courant du troisième transistor (p3) de type P,
- un quatrième transistor (p4) de type P; dont l'extrémité de la voie de courant est située à l'autre extrémité de la voie de courant du sixième transistor (n6) de type N et dont les deux grilles sont connectées au point de jonction des autres extrémités des voies de courant des second et quatrième transistors (n2, n4) de type N,
- une seconde porte NON-OU-EXCLUSIF (xn2), dont une entrée est reliée à l'autre extrémité de la voie de courant du second transistor (n2) de type N, et dont l'autre entrée est reliée au point de référence (-u) de la source de tension de service, et
- un cinquième transistor (p5) de type P, dont la voie de courant commandée est située entre la sortie de la seconde porte NON-OU-EXCLUSIF (xn2) et la sortie de somme (s) et dont la grille reçoit, ainsi que les grilles des second et troisième transistors (n2, n3) de type N ainsi que des second et troisième transistors (p2, p3) de type P, un signal de remise à l'état initial (r).

4. Multiplicateur CMOS comportant des étages selon les revendications 1 à 3, pour un multiplicande (X) à (m+2) positions et un multiplicateur (Y) à (n+2) positions, m et n possédant leurs valeurs maximales respectives et variant conformément à la cadence (st) du système, caractérisé en outre par les caractéristiques suivantes :
- les m+2 positions (x0...xs) du multiplicande (X) auquel sont envoyés un signal de décalage (ts) et un signal de réception (te), sont appliquées aux entrées parallèles d'un premier registre à décalage (sr1) à m+2 étages,
- une seule chaîne (mp) d'étages multiplicateurs, a laquelle sont envoyés un signal de cadence (t), le signal de lecture (te) en tant que signal de remise à l'état initial (r) et un signal de signe (p), est constituée par l'étage d'entrée du multiplicateur associé au chiffre de signe (ys) du multiplicateur (Y) et, dans le cas où m est inférieur à n, par m étages principaux du multiplicateur ainsi que par un seul étage intermédiaire du multiplicateur, qui est disposé en un emplacement quelconque en aval de l'étage d'entrée, et au contraire, dans le cas où m est supérieur ou égal à n, par m+2 étages principaux, la sortie de somme (s) d'un étage (par exemple pour y4) étant reliée respectivement directement à l'entrée de réception (ci) de l'étage directement voisin (par exemple pour y3) possédant la valeur inférieure,
- à l'aide d'étages additionneurs branchés en série est formé un additionneur parallèle (pa) à (n+1) étages, auquel sont envoyés un signal de réception (tu) et un signal de sortie (ta), et dans lequel respectivement la sortie de report (aa) d'un étage (par exemple pour p1) est reliée à l'entrée de report (ai) de l'étage directement voisin (par exemple pour pk) possédant une valeur accrue, et un signal ("0"), qui correspond au zéro, est appliqué en permanence a l'entrée de report de l'étage possédant la valeur la plus faible,
- les étages multiplicateurs et les étages additionneurs sont reliés entre eux comme suit :
-- la sortie de report (ca) de l'étage multiplicateur de poids le plus faible (pour y0) est raccordée à l'entrée du nombre à additionner (w) de l'étage additionneur de poids le plus faible, et la sortie de somme (s) de l'étage multiplicateur de poids le plus faible en second (pour y1) est raccordée à l'entrée (v) du nombre à additionner de cet étage additionneur,
-- la sortie de report (ca) de l'étage multiplicateur de poids le plus faible en second (pour y1) est raccordée à l'entrée du nombre à additionner (w) de l'étage additionneur de poids le plus faible en second, et la sortie de somme (s) de l'étage multiplicateur de poids le plus faible en troisième (pour y2) est raccordée à l'entrée (v) du nombre à additionner de cet étage additionneur,
-- et ainsi de suite jusqu'à l'étage multiplicateur pour le signal de signe (ys) et l'étage additionneur de poids maximum (pour ps),
- la sortie de somme (s) de l'étage multiplicateur de poids le plus faible (pour y0) est raccordée à l'entrée série d'un second registre à décalage (sr2), comportant au maximum (m+3) étages, les chiffres (p...) du produit pouvant être prélevés sur les sorties en parallèle de ce registre à décalage et conjointement sur les sorties de sommes (sa) de l'additionneur parallèle (pa), tandis que le signal de cadence (t) en tant que signal de décalage et le signal de réception (ta) et le signal de sortie (tu) sont envoyés à ce registre, et
- un étage d'attaque de transmission de cadence (tt) produit, à partir d'une cadence (st) du système, les signaux impulsionnels suivants, qui possèdent une fréquence égale respectivement à (m+4) fois la fréquence de la cadence du système et dont les impulsions apparaissent pendant la durée de période (T) correspondant à cette fréquence, imaginée comme étant subdivisée en 2(m+4) périodes partielles (Tp) :
-- le signal de décalage (ts), qui est constitué par une rafale de m+1 impulsions possédant la durée d'une période partielle (Tp) est séparé par des intervalles égaux, cette rafale commençant au début de la quatrième période partielle,
-- le signal de cadence (t), qui est constitué par une rafale d'impulsions, qui commence en même temps que le signal de décalage (ts), est de même type que ce signal, et contient m+2 impulsions,
-- le signal de réception (te), identique au signal de remise à l'état initial (r) et qui est constitué par une impulsion apparaissant pendant les premières et secondes périodes partielles,
-- le signal de signe (p), qui est identique au signal de sortie (ta) et qui est constitué par une impulsion qui apparaît pendant la dernière période partielle de la rafale de la cadence de transfert (ts) et pendant la période partielle ultérieure, et
-- le signal de réception (tu), qui est constitué par une impulsion apparaissant pendant les deux dernières périodes partielles.

5. Multiplicateur CMOS selon la revendication 4, caractérisé en ce que l'étage additionneur CMOS pour nombres binaires à compléments de deux est constitué des circuits partiels suivants :
- un premier et un second transistors de type N (an1, an2), dont les grilles reçoivent un signal de transfert (tu),
- une première porte OU-EXCLUSIF (ex1), à l'une ou l'autre entrée de laquelle est appliqué l'un des chiffres à additionner (v) ou l'un des chiffres à additionner (w), par l'intermédiaire de la voie de courant commandée du premier ou du second transistor de type N (an1,an2),
- une seconde porte OU-EXCLUSIF (ex2) à une entrée de laquelle est transmis un signal de report (ai) et dont l'autre entrée se trouve à la sortie de la première porte OU-EXCLUSIF (ex1),
- un troisième transistor de type N (an3) dont la voie de courant commandée est disposée entre la première entrée de la seconde porte OU-EXCLUSIF (ex2) et la sortie de report (aa),
- un transistor de type P (ap) dont la voie de courant commandée est disposée entre l'autre entrée de la première porte OU-EXCLUSIF (ex1) et la sortie de report (aa), dont la grille est connectée avec celle du troisième transistor de type N (an3), à la sortie de la première porte OU-EXCLUSIF (ex1), et
- un quatrième transistor de type N (an4) dont la voie de courant commandée est disposée entre la sortie de la seconde porte OU-EXCLUSIF (ex2) et la sortie de somme (sa), dont la grille reçoit un signal de sortie (ta).
